Europäisches Patentamt

European Patent Office

Office européen des brevets

(11) Publication number: **0 234 823 B1**

# EUROPEAN PATENT SPECIFICATION

(45) Date of publication of patent specification: **02.01.92**  (51) Int. Cl.⁵: **B60J 3/02**

(21) Application number: **87301291.8**

(22) Date of filing: **13.02.87**

(54) **Sun Shield System.**

(30) Priority: **13.02.86 US 829400**

(43) Date of publication of application:
**02.09.87 Bulletin 87/36**

(45) Publication of the grant of the patent:
**02.01.92 Bulletin 92/01**

(84) Designated Contracting States:
**DE ES FR GB IT**

(56) References cited:
**DE-A- 3 136 494**   **US-A- 2 559 471**
**US-A- 4 149 749**   **US-A- 4 500 131**
**US-A- 4 546 551**   **US-A- 4 595 228**

(73) Proprietor: **PRINCE CORPORATION**
**Windcrest Drive**
**Holland Michigan 49423(US)**

(72) Inventor: **Sheldon, John Watjer**
**3763-62nd Street**
**Holland Michigan 49423(US)**
Inventor: **Dykstra, Ronald A.**
**7635 Blakely Drive North East**
**Rockford Michigan 49341(US)**

(74) Representative: **Robinson, Anthony John**
**Metcalf et al**
**Kilburn & Strode 30 John Street**
**London, WC1N 2DD(GB)**

Rank Xerox (UK) Business Services

## Description

The present invention relates to a sun shield system for a vehicle and particularly one which includes a sliding panel having a pivoted visor mounted on one edge. It also relates to a vehicle console.

A recent car design concept incorporates an integral windshield (windscreen) and transparent roof section which extends from the normal windshield area rearwardly over the passenger's and driver's seat to present a transparent cover for the driver and front seat passenger. Although providing a protected and yet unique open feeling when driving or riding in the vehicle, it is sometimes desirable to protect and shield the occupants of the vehicle from sunlight. In order to provide a protective and/or covering shield which does not detract from the desirable open appearance of the vehicle, a radically different sun shield system was conceived which selectively provides the desired shading and/or covering without detracting from the aesthetics of the vehicle.

Also, with a glass windshield and roof member, it is not practical to support a conventional overhead centre console from the somewhat fragile glass structure. Thus, a new concept was conceived for providing a console structure to the vehicle.

The sun screen and console of the present invention attractively provides the desired protection by providing a panel which is slideably mounted to the vehicle and movable fore and aft within the vehicle in a generally horizontal plane between a retracted position in which it is enclosed within a pocket at the rear headliner area of the vehicle and a forwardly extended position which provides cover above the passenger's and/or driver's seat. To the forward edge of the sliding panel, there may be pivotally mounted a visor which is movable between a stored position adjacent the sliding panel and generally parallel thereto, and a lowered use position pivoted away from the panel in a position extending downwardly from the top portion of the windshield.

The invention also contemplates a console comprising cantilever beam means which, in the preferred embodiment, comprise a pair of parallel spaced beams which are mounted in a cantilevered fashion to the rear roof area of the vehicle and which extends forwardly under the transparent roof. In a preferred embodiment, the beams are formed to define guide and support means for a pair of sliding sun screen panels. The console may include instrumentation such as a digital electronic compass of the type disclosed in US-A-4,546,551 and other convenient accessories.

According to the present invention, a vehicle visor and panel assembly is characterised by panel means and means for slideably mounting the panel means in a generally horizontal plane for longitudinal movement between a retracted position and an extended position, and a sun visor pivotally mounted to an edge of the panel means for movement between a stored position adjacent the panel means and a use position pivoted away from the panel means. Preferably the stored position is in a plane generally parallel to that of the panel means. A plurality of use positions may be provided.

Alternatively, a pair of spaced panels may be provided, and in this arrangement, there is provided a visor and panel assembly for a vehicle having an optically transparent forward roof section comprising: a pair of spaced panels and means for slideably mounting said panels over the forward roof area of the vehicle in spaced relationship to each other and in a generally horizontal plane for longitudinal movement between a retracted rearward position and an extended forward position above the occupant's head; and a sun visor pivotally mounted to an edge of each of said panels for movement between a stored position adjacent said panel and in a plane generally parallel to the panel of said panels and use positions pivoted downwardly from said panels.

The said edge may be the forward edge of the or each panel or panel means. The or each panel or panel means may be planar, and may be made out of an opaque material, preferably a tear-resistant polymeric material.

Guide tracks may be provided, preferably mounted on either side of the vehicle and extending longitudinally, for slideably receiving the panel means.

According to another aspect of the invention, a vehicle visor and panel assembly is provided, in combination with a console support system for a vehicle whose characterising features are set out in the characterising portion of Claim 13.

Further developments in line with claims 1 and 13 are referred to in the dependent claims.

The invention may be carried into practice in a number of ways, and one specific embodiment will now be described by way of example, with reference to the drawings, in which

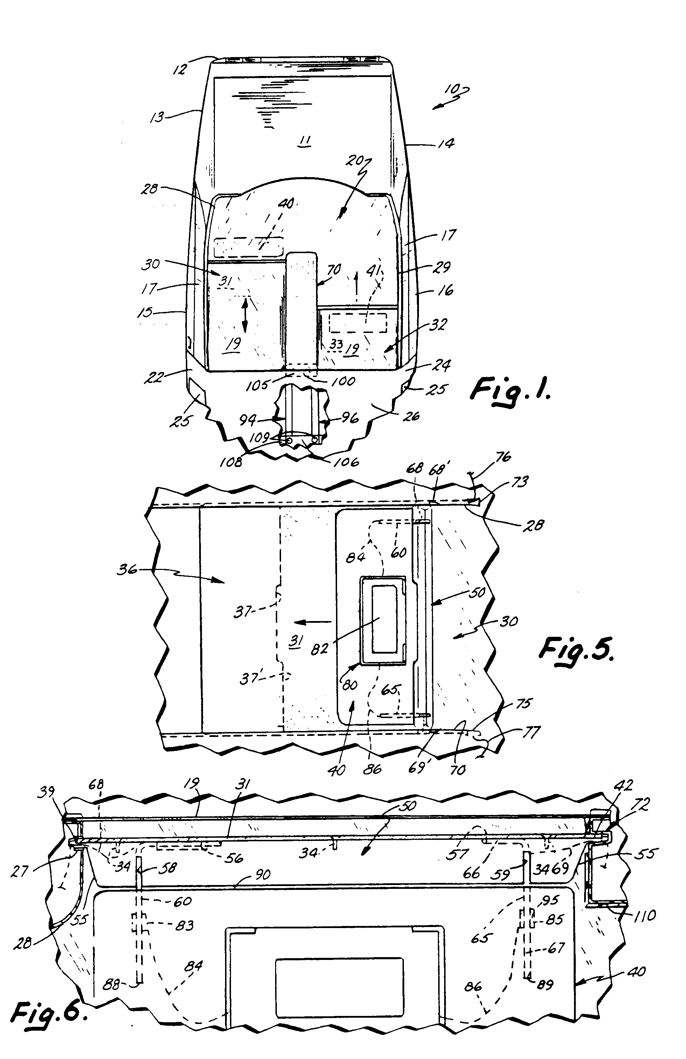

Figure 1 is a fragmentary top plan view of a vehicle embodying the present invention;

Figure 2 is an enlarged fragmentary perspective view of a portion of the interior of the vehicle shown in figure I with the sun screen shown in the stored position;

Figure 3 is a fragmentary perspective view of the structure shown in figure 2 with the sun screen in an intermediate position;

Figure 4 is a fragmentary perspective view of the structure shown in figure 3 showing the sun screen in a third position;

Figure 5 is an enlarged fragmentary top plan view, partly in schematic form, of the present invention;

Figure 6 is an enlarged fragmentary cross-sectional view of the system of the present invention taken along section lines VI-VI of figure 4;

Figure 7 is a greatly enlarged fragmentary view of a portion of the structure shown in figure 6;

Figure 8 is a cross-sectional view of the structure shown in figure 7 taken along section lines VIII-VIII of figure 7;

Figure 9 is a fragmentary cross-sectional view of the cantilevered centre console taken along section lines IX-IX of figure I; and

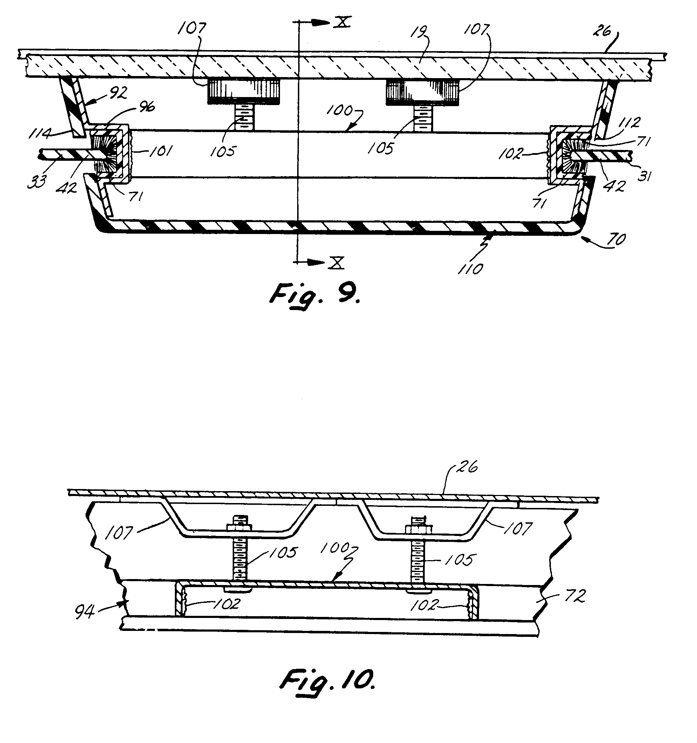

Figure I0 is a fragmentary cross-sectional view of the console taken along section lines X-X of figure 9.

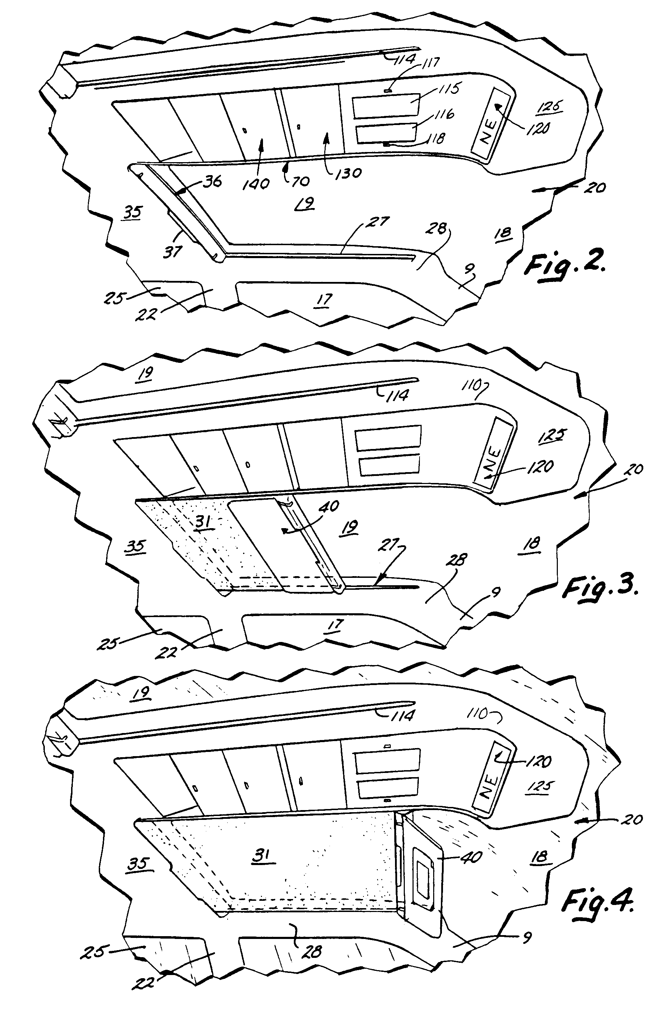

Referring initially to Figure I, there is shown a vehicle such as an automobile I0 incorporating an embodiment of the present invention. The vehicle I0 can be any type of automobile having a front end I2, front left and right side fenders (wings) I3 and I4 and driver and passenger access doors I5 and I6, each with windows I7. A integral windshield and roof 20 is provided which includes a forward downwardly curved windshield area I8 (figures 2 to 4) and an upper rearward and generally horizontally-extending roof section I9 which extends over the driver and passenger seats located inwardly from and adjacent the side doors I5 and I6. The windshield-roof 20 extends at its lowered forward edge from behind the hood (bonnet) II of the vehicle I0 to an area behind the front doors I5 and I6 to the frame support structure commonly known as the B pillars 22 and 24. From there the rear edge of the transparent roof 20 is sealed to a sheet metal rear roof 26 which extends over the rear seat area of the car which may include rear side windows 25. A suitable sealing material is provided at the interface of the translucent windshield-roof member 20 and the sheet metal roof 26 and the other body parts at the peripheral junction of this integral curved member 20 with the vehicle. The transparent member 20 can be made of an acrylic material such as Plexiglas (trade mark), although it is contemplated that in mass-production it will be integrally formed of a laminated glass material conventionally used for vehicle windows.

As can be seen in figures 2 to 4, which show the interior of the vehicle looking upwardly toward the upper left corner of the vehicle above the driver's seat, the integral windshield-roof 20 provides a very open appearance for the vehicle's occupants, while at the same time providing protection against the elements.

A central console 70 extends forwardly between the front seats of the vehicle and immediately adjacent the lower surface of the roof section I9 of the windshield-roof 20 and in contact therewith, although as will be explained below in greater detail, the central console 70 is not supported by the glass or acrylic member 20 and is mounted in a cantilevered fashion to the rear roof 26 of the vehicle. In the preferred embodiment, the central area of the glass roof member 20 above the console 70 is painted black on the inner surface such that the inner mechanical and electrical components within the console 70 cannot be seen from the exterior of the vehicle through the otherwise transparent roof member 20. Although providing an extremely open and pleasant ambiance for the vehicle interior, on some occasions it is desirable to provide more privacy by enclosing the roof sections I9 above the driver and passenger seats as well as providing protection against direct sunlight over these areas and the normal upper areas of the windshield section I8 of the roof member 20. To provide such a sun shielding and/or covering function, the unique sun shield system of the present invention is provided and now described.

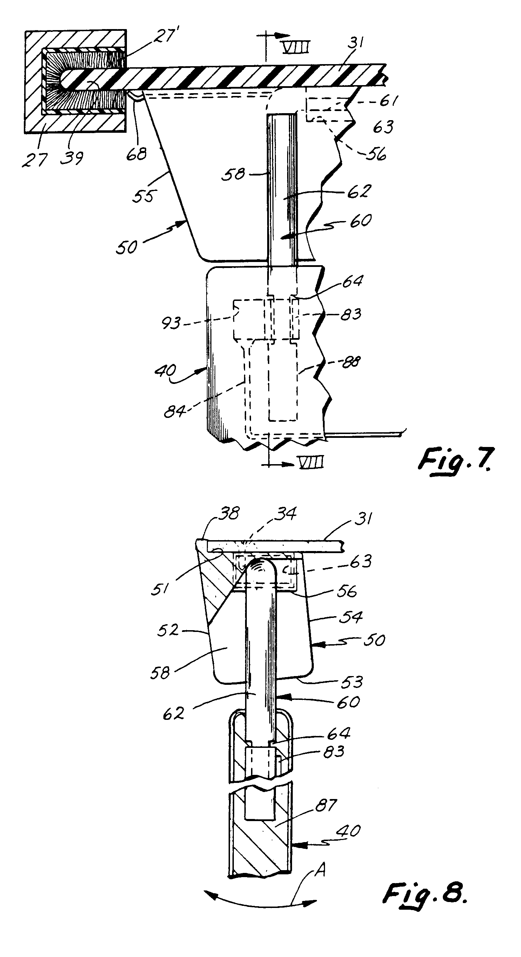

The sun shield system embodying the present invention includes two shield assemblies 30 and 32 (figure I), each of which are substantially identical. The assemblies 30 and 32 include a generally horizontally-extending longitudinally-slideable panel member 3I and 33, respectively, to which there is pivotally mounted at each of the forward edges thereof a visor 40 and 4I. In figure I, which is a view looking through the transparent roof of the vehicle, the left side assembly 30 is shown in its fully extended position with the visor 40 lowered to a use position as also illustrated in figure 4. The passenger side panel, on the other hand, is shown in a partially extended position. Each of the panels are slideably mounted under the roof sections I9 between guide and support means formed in the console 70 and associated guide and support means formed in the vehicle side beams 28 and 29. Since each of the sun shield assemblies 30 and 32 are substantially identical, only the assembly 30 is described in detail and is shown in figures 2-4. As can be appreciated, these panels move between their extended position, as seen in figure 4, and a retracted concealed position, as illustrated in figure 2, between the outer sheet metal roof 26 of the vehicle and an interior headliner 35 of the vehicle, it being understood that typically there will be a space between the interior typically fabric headliner 35 and the outer sheet metal roof 26 defining a forwardly opening pocket 36 (figure 5) into which the assemblies 30 and 32 can be retracted when not in use.

Each of the sun shield assemblies 30 and 32 include a relatively large planar and generally rectangular panel such as the panel 3I associated with

the assembly 32 and shown in greater detail in the top plan view of figure 5.

Coupled to the panel 3l is the visor 40 which is pivotally mounted to a leading edge 38 (figure 8) of the panel 3l by means of a mounting bar 50 and a pair of L-shaped pivot arms or rods 60 and 65. The mounting of the visor 40 to the panel 3l is described in greater detail below; however, it permits the visor to move between a position adjacent the panel 3l and generally parallel thereto, as illustrated in figures 3 and 5, for storage, as shown in figure 2, within the pocket 36 to intermediate positions, as shown in figure 4, and pivot outwardly away from the panel 3l, as shown in figure 4, for use of the visor over the upper windshield area l8 of member 20. As best seen in figures 5, 6, 7 and 9, the panel 3l includes opposite edges 39 and 42 which extend within guide and support means associated with the vehicle support structure 28 and the console 70. The roof support beam 28 will internally include a generally U-shaped channel member 27 (figure 7) which is suitably secured to the vehicle frame by welding or the like and which includes a conventional U-shaped sliding seal insert 27′ which is typically employed, for example, along window edges and the like for permitting the glass windows to slide within the window channels of door frames in vehicles. The material 27′ is thus in wide commercial use as a sliding seal and protection member. Such material (labelled 7l) also lines a channel 72 for the edge 42 of the panel 3l, as best seen in figure 9.

The channels 27 and 72 extend in generally parallel relationship from near the forward edge (figure l) of the console 70 to a distance rearwardly equal to at least the longitudinal length of the panel 3l such that the panel can be fully retracted by manually sliding the panel rearwardly within the pocket 36. Typically, the lower surface of the panels 3l and 33 will be upholstered or covered with a flocking material which provides an appearance to the selectively exposed undersurface of the panel corresponding to that of the vehicle's interior upholstery. The edges 39 and 42, however, will not be covered with fabric to permit relatively easy sliding motion within the liner members 27′ and 7l associated with the channels 27 and 72. The leading lower edge of the pocket 36 in the headliner 35 adjacent the pocket opening includes recess 37 to allow the assembly 30 to fully retract within the pocket 36, as seen in Figure 2, into a position substantially flush with the forward edge 37′ of the pocket 36. The recess 37 provides fingerhold access to the mounting bar 59 which also provides a handle located at the leading edge of the assembly 30 for manually extending the assembly from the stored position as shown in figure 2. The panel 3l and the corresponding panel 33 on the right side of the vehicle are made of a suitable heat-resistant polymeric material such as polycarbonate.

Attached to the leading edge 38 of the panel 3l by a plurality of spaced screws 34, as best seen in figures 6 and 8, is the mounting bar 50 which serves to anchor the visor 40 to the relatively thin panel 3l and secure the L-shaped visor pivot rod 60 and 65 to the panel. Three such screws 34 represented in figure 6, although more than three may be employed; and if desired, an adhesive material can be employed to couple the polymeric bar 50 to the leading edge of the panel 3l. As seen in figure 8, the upper suface of the bar 50 has a rectangular recess 5l formed therein into which the leading edge 38 of the panel 3l is seated. A front wall 52 of the bar 50 is downwardly and rearwardly tapered to provide a neat and trim appearance to the assembly when stored, as shown in figure 2, while a bottom surface 53 is likewise tapered upwardly from front to rear such that a trailing wall 54 will readily insert into the pocket 36 since its height is somewhat less than the overall height of the forward edge 52. Similarly, as best seen in figures 6 and 7, the side walls 55 of the bar 50 are inwardly tapered from top to bottom to provide clearance between the vehicle members 28 and 29 and the console 70.

The mounting bar 50 includes two generally rectangular recesses 56 and 57 formed downwardly through the top surface 5l thereof for receiving one leg 6l and 66 of each of the L-shaped pivot rods 60 and 65 respectively. Communicating with each of these rectangular apertures are slots 58 and 59 (figures 6-8) which permit the downwardly depending legs 62 and 67 of the pivot rods 60 and 65 to extend therethrough such that the visor can pivot in an arc as represented by arrow A in figure 8 of about l30°. The rectangular aperture 56 is somewhat larger than the aperture 57 to accommodate a torque fitting 63 (figure 8) of the type disclosed in US-A-4,500,l3l which co-operates with flats formed on the leg 6l to tend to urge the visor 40 to a snap-up stored position as illustrated in figures 2, 3 and 5. Thus, the torque fitting 63 fits over the end 6l of the rod 60 and is held in stationary relationship with respect to the bar 50 by its nesting within the rectangular aperture 56 as best seen in figure 8. The fitting 63 can be of the type disclosed in the above identified patent. The leg 62 of the rod 60 and the corresponding leg 67 of the rod 65 extend significantly downwardly and below the lower surface 53 of the bar 50 to allow these extending legs to snap-fit and lockably extend within the visor 40.

Each of the visor rods 60 and 65 are coupled to a respective polarity of the vehicle's power supply system through a contact arrangement including conductors 68 and 69 (figures 5-7) which are coupled to the legs 6l and 66, respectively, of the pivot rod by suitable electrical connectors. The remote ends of the conductors 68 and 69 extend to conventional spring-loaded contacts 68' and 69' - (figure 5) mounted to the edges 39 and 42 of the panel 3l to extend into guide tracks 27 and 72 to engage electrical contacts 73 and 75, repectively, at the forward end of the respective tracks. When the slide 3l is in its forwardmost position, as shown in figure 3, the contacts 73 and 75 will be coupled to the conductors 68 and 69, respectively, and supply operating power through the conductive pivot rods 60 and 65 for the purpose of supplying power to the visor 40. The contacts 68', 69', 73 and 75 are shown schematically in figure 5 and are spring-loaded leaf-type contacts. Conductors 76 and 77 are coupled to the contacts 73 and 75, respectively, and extend through the A pillars 9 (figures 2-4) of the vehicle to the vehicle's power supply system to provide a positive supply voltage to one of the pivot rods 60 of each of the visor 40 and 44, while the remaining conductor toward the console 70 of the vehicle is coupled to ground through the conductor 77 and the contacts 69' and 75. Naturally, when the visor is in a stored raised position, as shown for example in figures 3 and 5, the power will be unavailable to the visor since the interconnecting pivot rods are not activated. Thus movement of the sliding panel selectively provides operating power to the visors which are now described.

Each of the visors 40 and 44 is preferably of the illuminated vanity mirror type including a covered illuminated vanity mirror package 80 (figure 5) having a cover 82 over an illuminated vanity mirror. Actuation of the cover will actuate lights associated with the mirror when power is available, through conductors 84 and 86 (figures 5 and 6) which are coupled to the conductive rods 60 and 65 through locking electrical clips 83 and 85, with the clip 83 being shown in detail in figures 7 and 8. The illuminated vanity mirror package 82 which is inserted into the body of each of the visor 40 and 44 can be of the general type disclosed in US-A-4,227,242.

The visor body comprises a polymeric core 87 (figure 8) having a pair of apertures 88 and 89 (figure 6) formed therein from the top edge 90 for receiving the legs 62 and 67 of the rods 60 and 65 respectively. Captured within the split-moulded polymeric core 87 which can be moulded, for example, of a polypropylene material as disclosed, for example, in US-A-3,926,470, are rectangular recesses 93 and 95 for anchoring the snap-lock conductive clips 83 and 85, respectively, within the core and in coaxial alignment with the apertures 88 and 89 respectively. The legs 62 and 67 of the rods 60 and 65, respectively, include annular recess 64, as best seen in figures 7 and 8, of a reduced diameter such that as the rod legs 62 and 67 are inserted into apertures 88 and 89, the rods extend through the clips 83 and 85 deforming the spring-loaded arms of the fuse cartridge-type clips until the reduced diameter recess 64 aligns with the clips. When this occurs, the clips snap-lock around the reduced diameter section, making electrical contact with the conductive rods 60 and 65 and holding the rod ends 62 and 67 within the body of the visor. Thus, the rod provides a mechanical means of pivotal attachment of the visors to the respective sliding panel 3l and 33 and also provide an electrical connection between the members. The visor need not include the illuminated vanity mirror package 80 in which case the clips 83 and 85 serve only to mechanically lock the rod ends in place.

The cantilevered beam construction of the console 70 is best seen in figures l, 9 and l0, and referring specifically to figure 9, includes a pair of steel beams 92 and 94 which integrally include generally rectangular channel means 96 and 72 for receiving the channel lining material 7l which is secured thereto by means of suitable adhesive and which slideably receives the edges 42 of the panels 3l and 33.

In order to provide a tapered and sleek appearance to the console 70, the beams typically have a lower inwardly-converging inclined shape, as seen in figure 9, with the channels extending in a generally horizontal plane. The beams extend from near the rear end (figure l) of the console rearwardly beyond the B pillar area typically toward the rear window of the vehicle. The beams are joined in at least one location by a U-shaped cross beam l00 which is welded at junctions l0l and l02 to the beams 92 and 94. As seen in figure l0, the beam l00 is a relatively wide beam which, in the preferred embodiment, is located in alignment with the B pillars 22 and 24 of the vehicle as shown in phantom schematic form in figure l. The cross member l00 is secured to roof support beams l07 in the B pillar area by suitable fastening means such as four bolts l05 shown in figures l, 9 and l0. The beams 92 and 94 may also be supported at the end of the beams remote from front end by a second cross beam l06 (figure l), again welded to hold the beam 92 and 94 in parallel spaced reltionship, with the second beam l06 also being shaped like beam l00 and welded to the longitudinally extending beams 92 and 94. The cross member l06 likewise is secured to a sheet metal cross member l08 of the car's integral roof construction by means of fastening bolts l09 as seen in figure l. Attached to the beams 92 in a conventional manner is a moulded polymeric housing ll0 (figure 9) defining the outward configuration of the console which housing includes longitudinally extending slots 112 and 114 (figure 9) permitting the panels 31 and 33 to fit within the channels 72 and 96. The housing 110 may be made up of a polycarbonate integrally moulded to provide the decorative housing as well as additional support for the beams when the housing is attached thereto. The beams, when attached to the vehicle, hold the console 70 upwardly against the transparent roof section 19, and thus the console 70 does not apply any weight whatsoever to the glass or acrylic roof. If desired, a suitable foam insulation material can be placed between the upper end of housing 110 around its peripheral contact with the roof to prevent rattling.

The console 70 may include a variety of vehicle acessories inserted between the strutural beams and in the housing. Such accessories may include, as seen in figures 2-4 for example, a pair of map reading lamps 15 and 116 operated by push-button switches 117 and 118, resepctively. Additionally, the console may include a digital electronic compass and temperature display system 120 which can be of the type described in US-A-4,595,228. Behind the garage door opening compartment 130, there is provided a sun glass storage compartment 140 in the embodiment of console 70 as shown.

The housing 110 of the console 70 can be covered with a suitable upholstery material 125 to conform it to the general decor of the vehicle, if desired, or can be pebble-grained plastic without an upholstery material. By providing the cantilevered beam construction, no load is presented by the mounting of the console to the glass roof and the windshield member 20, and in fact, the cantilevered console can be mounted such that a slight upward pressure is provided on the glass for providing centre support as in the referred embodiment. The centre console beams likewise define guide and support means for the inner edges of each of the sliding visor panels and provides a variety of helpful vehicle accessories.

## Claims

1. A vehicle visor and panel assembly, characterised by panel means (31;33) and means for slideably mounting the panel means in a generally horizontal plane for longitudinal movement between a retracted position and an extended position (10) and a sun visor (40;41) pivotally mounted to an edge of the panel means for movement between a stored position adjacent the panel means and a use position pivoted away from the panel means.

2. An assembly as claimed in Claim 1 in which the means for slideably mounting the panel means (31;33) comprises a pair of parallel guide tracks (27,71;72,71) mounted in a vehicle (10) for slideably receiving opposite ends of the panel means (31;33).

3. An assembly as claimed in Claim 2 in which the guide tracks (27,71;72,71) extend longitudinally in the vehicle (10), and the visor (40;41) is mounted to a forward edge of the panel means (31;33).

4. An assembly as claimed in Claim 3 in which the visor (40;41) is mounted to the forward edge of the panel means (31;33) by a mounting bar (50) secured to the panel means and captively receiving a pair of arms (60,65) pivotally mounted in spaced relationship to the bar (50) and extending from the bar to receive the visor (40;41) for pivotally mounting the visor to the panel means (31;33).

5. An assembly as claimed in claim 4 in which each of the arms (60,65) is L-shaped, and the bar (50) includes recess means (56,57) for receiving one leg (61,66) of each of the L-shaped arms and permitting the arms to pivot about an axis of the said one leg.

6. An assembly as claimed in claim 5 in which at least a portion of the recess means (56, 57) faces the panel means (31; 33) such that the said one leg (61,66) of each of the arms (60,65) is rotatably held between the bar (50) and the panel means (31; 33).

7. An assembly as claimed in claim 5 or claim 6 including a spring torque fitting (63) extending between the bar (50) and at least one of the legs (61,66) to urge the visor (40; 41) toward the stored position and to hold the visor in the stored position.

8. An assembly as claimed in any one of claims 5 to 7 in which the visor (40; 41) comprises a visor body having one edge facing the panel means (31; 33) and including a pair of spaced apertures (88,89) formed in the visor body though the said edge for receiving the remaining legs (62,67) of each of the L-shaped arms (60,65) and means for holding the remaining legs in the visor body.

9. An assembly as claimed in claim 8 in which the holding means includes a pair of spring clips (83,85) mounted within the visor body and lockably engaging the remaining legs (62,67).

10. An assembly as claimed in any one of the preceding claims further including an illuminated vanity mirror assembly (80) mounted to the visor (40;41) and means for selectively supplying operating power to the illuminated vanity mirrow assembly to illuminate a mirrow associated therewith.

11. An assembly as claimed in Claim 10 in which the means for selectively supplying operating power comprises co-operating electrical contacts (73,75;68,69) on the panel means (31;33) and on the means for slideably mounting the panel means, which are arranged to supply power to the vanity mirror assembly (80) when the panel means (31;33) is in the extended forward position.

12. An assembly as claimed in any one of the preceding claims when dependent upon Claim 2 including a further pair of parallel guide tracks (72,71;27,71) mounted in the vehicle (10) for slideably receiving opposite edges of a further panel means (33;31), one guide track (71) of each of the two pairs of guide tracks being mounted in a central overhead console (70) of the vehicle.

13. A vehicle visor and panel assembly as claimed in any preceding claim in combination with a console support system for a vehicle (10) characterised by a pair of horizontally-extending generally parallel elongate support beams (92,94); cross member means for coupling the support beams together at or near one end thereof; a housing (110) coupled to the support beams (92,94) and including one or more vehicle accessories positioned between the support beams and spaced from the cross member means; and means for securing the cross member means to a vehicle such that the housing (110) is supported by the support beams in a cantilevered fashion.

14. A combination as claimed in Claim 13 in which the cross member means comprises a pair of cross members (100,106) coupled to the support beams.

15. A combination as claimed in Claim 13 or Claim 14 in which the housing (110) defines a cover for the support beams (92,94).

16. A combination as claimed in any one of claims 13 to 15 in which the support beams (92,94) include channel means (112,114) integrally formed therein and facing outwardly to define guide tracks along opposite sides of the housing (110).

17. A vehicle (10) characterised by a visor and panel assembly as claimed in any one of Claims 1 to 12 or a combination of visor and panel assembly and console support system as claimed in any one of Claims 13 to 16, mounted in a roof thereof.

**Revendications**

1. Assemblage de pare-soleil et de panneau pour véhicule, caractérisé par un panneau (31 ; 33) et des moyens pour monter à coulissement le panneau dans un plan sensiblement horizontal pour lui permettre un mouvement longitudinal entre une position de rétraction et une position extraite (10) et un pare-soleil (40 ; 41) monté pivotant sur un bord du panneau et pouvant se déplacer entre une position de rangement dans laquelle il est voisin du panneau et une position d'utilisation dans laquelle il est rabattu par pivotement de manière qu'il s'écarte du panneau.

2. Assemblage selon la revendication 1, dans lequel les moyens de montage à coulissement du panneau (31 ; 33) consistent en une paire de glissières parallèles de guidage (27,71 ; 72, 71) montée dans un véhicule (10) afin de loger à coulissement les extrémités opposées du panneau (31 ;33).

3. Assemblage selon la revendication 2, dans lequel les glissières de guidage (27, 71 ; 72, 71) sont orientées longitudinalement dans le véhicule (10) et le pare-soleil (40 ; 41) est monté sur un bord antérieur du panneau (31 ; 33).

4. Assemblage selon la revendication 3, dans lequel le pare-soleil (40 ; 41) est monté sur le bord antérieur du panneau (31 ; 33) au moyen d'une barre de montage (50) fixée sur le panneau et logeant à demeure deux bras (60, 65) montés à pivotement à distance l'un de l'autre sur la barre (50) et partant de la barre pour supporter le pare-soleil (40 ; 41) de manière à monter le pare-soleil de façon qu'il puisse pivoter sur le panneau (31 : 33).

5. Assemblage selon la revendication 4, dans lequel chacun des bras (60, 65) est en cornière et la barre (50) comporte des évidements (56, 57) de logement d'une branche (61, 66) de chaque bras en cornière de manière à permettre aux bras de pivoter autour d'un axe de ladite une branche.

6. Assemblage selon la revendication 5, dans lequel au moins une partie de l'évidement (56, 57) est située en face du panneau (31 ; 33) de telle manière que ladite une branche (61, 66) de chacun des bras (60, 65) soit retenue à rotation entre la barre (50) et le panneau (31 ; 33).

7. Assemblage selon la revendication 5 ou 6, comprenant une ferrure élastique (63) exerçant un couple et disposée entre la barre (50) et au moins l'une des branches (61, 66) de manière à rappeler le pare-soleil (40 ; 41) vers la position de rangement et à retenir le pare-soleil en position de rangement.

8. Assemblage selon l'une quelconque des revendications 5 à 7, dans lequel le pare-soleil (40 ; 41) comprend un corps dont un bord est en face du panneau (31 ; 33) et qui comprend deux ouvertures (88, 89) situées à distance l'une de l'autre dans le corps du pare-soleil et passant par ledit bord pour loger les autres branches (62, 67) de chacun des bras en cornière (60, 65) et des moyens pour retenir les autres branches dans le corps du pare-soleil.

9. Assemblage selon la revendication 8, dans lequel les moyens de retenue comprennent deux bagues élastiques (83, 85) montées dans le corps du pare-soleil et s'enclenchant sur les autres branches (62, 67) pour les bloquer en place.

10. Assemblage selon l'une quelconque des revendications précédentes, comprenant par ailleurs un assemblage (80) de miroir éclairé de courtoisie monté sur le pare-soleil (40 ; 41) et des moyens d'alimentation sélective en énergie de mise en service de l'assemblage éclairé de miroir de courtoisie afin d'éclairer un miroir que cet assemblage comporte.

11. Assemblage selon la revendication 10, dans lequel les moyens d'alimentation sélective en énergie de mise en service comprennent des contacts électriques coopérants (73, 75 ; 68, 69) placés sur le panneau (31 ; 33) et sur les moyens de montage à coulissement du panneau, lesdits contacts étant disposés de manière à alimenter en énergie l'assemblage (80) de miroir de courtoisie lorsque le panneau (31 ; 33) est à la position antérieur d'extraction.

12. Assemblage selon l'une quelconque des revendications précédentes qui dépend de la revendication 2, comprenant une autre paire de glissières parallèles de guidage (72, 71 ; 27

; 71) montée dans le véhicule (10) de manière à loger à coulissement les bords opposés d'un autre panneau (33 ; 31), une glissière de guidage (71) de chacune des deux paires de glissières de guidage étant montée dans une console centrale (70) du toit du véhicule.

13. Assemblage de pare-soleil et de panneau pour véhicule selon l'une quelconque des revendications précédentes en combinaison avec un système de support d'une console pour un véhicule (10), caractérisé par deux poutrelles allongées (92, 94) de support, orientées horizontalement et sensiblement parallèles ; une traverse de liaison des poutrelles de support l'une à l'autre sur ou à proximité d'une extrémité de ces dernières ; une enveloppe (110) reliée aux poutrelles de support (92, 94), logeant un ou plusieurs accessoires du véhicule et placée entre les poutrelles de support et à distance de la traverse ; et des moyens pour fixer la traverse à un véhicule de telle manière que l'enveloppe (110) soit supportée par les poutrelles de support en porte à faux.

14. Combinaison selon la revendication 13, dans laquelle la traverse consiste en deux éléments de traverse (100, 106) reliés aux poutrelles de support.

15. Combinaison selon la revendication 13 ou 14, dans laquelle l'enveloppe (110) forme un élément de recouvrement des poutrelles de support (92, 94).

16. Combinaison selon l'une quelconque des revendications 13 à 15, dans laquelle les poutrelles de support (92, 94) comprennent des rainures (112, 114) réalisées par profilage et orientées vers l'extérieur afin de constituer des glissières de guidage le long des côtés opposés de l'enveloppe (110).

17. Véhicule (10) caractérisé par un assemblage de pare-soleil et de panneau selon l'une quelconque des revendications 1 à 12, ou combinaison d'assemblage de pare-soleil et de panneau avec un système de support de console selon l'une quelconque des revendications 13 à 16, monté dans son toit.

**Patentansprüche**

1. Eine Sonnenblenden- und Paneelanordnung für Fahrzeuge, **gekennzeichnet durch** Paneeleinrichtungen (31; 33) und Vorrichtungen zum verschiebbaren Anbringen der Paneeleinrichtungen in einer im wesentlichen horizontalen Ebene für eine längsgerichtete Bewegung zwischen einer zurückgefahrenen und einer ausgefahrenen Stellung (10) und eine Sonnenblende (40; 41), die schwenkbar an einer Kante der Paneeleinrichtung für eine Bewegung zwischen einer Lagerstellung neben der Paneeleinrichtung und einer von der Paneeleinrichtung weggeschwenkten Benutzungsstellung angebracht ist.

2. Eine Anordnung nach Anspruch 1, bei der die Vorrichtung zum verschiebbaren Anbringen der Paneeleinrichtung (31; 33) ein Paar paralleler Führungsspuren (27, 71; 72, 71) umfaßt, die in einem Fahrzeug (10) zur verschiebbaren Aufnahme der gegenüberliegenden Seiten der Paneeleinrichtung (31; 33) angebracht sind.

3. Eine Anordnung nach Anspruch 2, bei der die Führungsspuren (27, 71; 72, 71) in Längsrichtung in dem Fahrzeug (10) verlaufen und die Sonnenblende (40; 41) an einer vorderen Kante der Paneeleinrichtung (31; 33) befestigt ist.

4. Eine Anordnung nach Anspruch 3, bei der die Sonnenblende (40; 41) an der vordere Kante der Paneeleinrichtung (31; 33) durch eine Befestigungsstange (50) befestigt ist, die an der Paneeleinrichtung angebracht ist und ein Paar Arme (60, 65) fest aufnimmt, die schwenkbar und mit Abstand zueinander an der Stange (50) befestigt sind und sich von der Stange weg erstrecken zur Aufnahme der Sonnenblende (40; 41), um die Sonnenblende schwenkbar an der Paneeleinrichtung (31; 33) zu befestigen.

5. Eine Anordnung nach Anspruch 4, bei der jeder der Arme (60, 65) L-förmig ausgebildet ist und die Stange (50) Aussparungselemente (56, 57) aufweist, um einen Schenkel (61, 66) jedes L-förmigen Armes aufzunehmen und ein Schwenken der Arme um die Achse des einen Schenkels zu ermöglichen.

6. Eine Anordnung nach Anspruch 5, bei der zumindest ein Teil der Aussparungselemente (56, 57) der Paneeleinrichtung (31; 33) so gegenüberliegt, daß der eine Schenkel (61, 66) jedes Arms (60, 65) drehbar zwischen der Stange (50) und der Paneeleinrichtung (31; 33) gehalten wird.

7. Eine Anordnung nach Anspruch 5 oder 6 umfassend eine Drehfederhalterung (63), die sich zwischen der Stange (50) und mindestens einem der Schenkel (61, 66) erstreckt, um die Sonnenblende (40; 41) in die Lagerstellung zu bewegen und die Sonnenblende in der Lagerstellung zu halten.

8. Eine Anordnung nach einem der Ansprüche 5 bis 7, bei der die Sonnenblende (40; 41) einen Sonnenblendenkörper aufweist, dessen eine Kante der Paneeleinrichtung (31; 33) gegenüberliegt, und die ein Paar mit Zwischenraum angeordnete Öffnungen (88, 89), die in dem Sonnenblendenkörper durch die Kante hindurch zur Aufnahme der übrigen Schenkel (62, 67) jedes der L-förmigen Arme (60, 65) ausgebildet sind, und eine Halterung zum Halten der übrigen Schenkel in dem Sonnenblendenkörper aufweist.

9. Eine Anordnung nach Anspruch 8, in der die Halterung ein Paar Federklammern (83, 85) aufweist, die in dem Sonnenblendenkörper angebracht sind und an den übrigen Schenkel (62, 67) verriegelbar angreifen.

10. Eine Anordnung nach einem der vorhergehenden Ansprüche, die ferner eine beleuchtete Kosmetikspiegelanordnung (80), die an der Sonnenblende (40; 41) angebracht ist, und eine Vorrichtung aufweist, um die Kosmetikspiegelanordnung wahlweise mit einem Betriebsstrom zur Beleuchtung eines damit verbundenen Spiegels zu versorgen.

11. Eine Anordnung nach Anspruch 10, bei der die Vorrichtung für die wahlweise Zuführung eines Betriebsstroms zusammenwirkende elektrische Kontakte (73, 75; 68, 69) auf der Paneeleinrichtung (31; 33) und auf der Vorrichtung für die verschiebbare Anbringung der Paneeleinrichtung aufweist, die die Kosmetikspiegelanordnung (80) mit Strom versorgen, wenn die Paneeleinrichtung (31; 33) sich in der ausgezogenen, vorderen Stellung befindet.

12. Eine Anordnung nach einem der vorhergehenden Ansprüche in Abhängigkeit von Anspruch 2, die ein weiteres Paar paralleler Führungsspuren (72, 71; 27, 71) aufweist, die in dem Fahrzeug (10) zur verschiebbaren Aufnahme gegenüberliegender Kanten einer weiteren Paneeleinrichtung (33; 31) angebracht sind, wobei eine Führungsspur (71) jedes der zwei Führungsspurenpaare in einer Deckenmittelkonsole (70) des Fahrzeugs angebracht ist.

13. Eine Sonnenblenden- und Paneelanordnung für Fahrzeuge nach einem der vorhergehenden Ansprüche in Kombination mit einem Konsolentragesystem für ein Fahrzeug (10), **gekennzeichnet durch** ein Paar sich horizontal erstreckender, im allgemeinen paralleler länglicher Stützträger (92, 94); eine Querträgervorrichtung, um die Stützträger (92, 94) an oder nahe bei einem ihrer Enden zu verbinden; ein Gehäuse (110), das mit den Stützträgern (92, 94) gekoppelt ist und ein oder mehrere Fahrzeugzubehörteile aufweist, die zwischen den Stützträgern und mit Abstand zu der Querträgervorrichtung angeordnet sind; und Einrichtungen, um die Querträgervorrichtung so an dem Fahrzeug zu befestigen, daß das Gehäuse (110) von den Stützträgern freitragend gehalten wird.

14. Eine Kombination nach Anspruch 13, in der die Querträgervorrichtung ein Paar Querträger (100, 106) aufweist, die mit den Stützträgern gekoppelt sind.

15. Eine Kombination nach Anspruch 13 oder Anspruch 14, in der das Gehäuse (110) eine Abdeckung für die Stützträger (92, 94) bildet.

16. Eine Kombination nach einem der Ansprüche 13 bis 15, in der die Stützträger (92, 94) Kanalelemente (112, 114) aufweisen, die darin integral ausgebildet sind und nach außen weisen, um so Führungsspuren entlang gegenüberliegender Seiten des Gehäuses (110) zu bilden.

17. Eine Fahrzeug (10), gekennzeichnet durch eine Sonnenblenden- und Paneelanordnung nach einem der Ansprüche 1 bis 12 oder durch eine Kombination aus Sonnenblenden- und Paneelanordnung und Konsolentragesystem nach einem der Ansprüche 13 bis 16, die in einem Dach des Fahrzeugs montiert ist.

Fig.1.

Fig.5.

Fig.6.

Fig.2.

Fig.3.

Fig.4.

Fig.7.

Fig.8.

EP 0 234 823 B1

Fig. 9.

Fig. 10.

14